# EUROPEAN PATENT SPECIFICATION

(11) **EP 0 903 030 B1**
(45) Date of publication and mention of the grant of the patent: **23.11.2005**
(21) Application number: 97927529.4
(22) Date of filing: 21.05.1997
(51) Int. Cl.: H04M 3/22, H04M 19/00, H04Q 1/28

(54) **DEVICE AT TELECOMMUNICATION SYSTEM**
GERÄT FÜR TELEKOMMUNIKATIONSSYSTEM
DISPOSITIF POUR RESEAU DE TELECOMMUNICATIONS

(30) Priority: 12.06.1996 SE 9602319
(43) Date of publication of application: 24.03.1999
(73) Proprietor: TELIA AB, 123 86 Farsta (SE)
(72) Inventor: ÄKERLUND, John, S-181 42 Lidingö (SE); LENNMARKER, Nils, S-191 47 Sollentuna (SE); HAGSTRÖM, Bengt, S-125 33 Älvsjö (SE)
(74) Representative: Akerman, Marten Lennart
(86) International application number: PCT/SE1997/000827
(87) International publication number: WO 1997/048223

(56) References cited:
- EP-A- 0 705 045
- DE-A- 3 333 791
- DE-A- 4 325 405
- GB-A- 2 229 871
- GB-A- 2 290 423
- US-A- 4 429 184

## Description

### TECHNICAL FIELD

The present invention relates to supply of electric power to parts belonging to a telecommunication system and terminal equipments.

### PRIOR ART

Supply of electric power to exchanges and nodes in the telecommunication systems of today is made via rectifiers. A rectifier solution is described in US-A-4429184. The rectifiers are connected locally to the public electric distribution network. At power failure, storage batteries take over, without any break, the distribution of electric power to the exchanges and the nodes. The time during which the exchanges will function is limited to a number of hours independent of the traffic load. The ordinary telephone sets get their power supply from the storage battery of the telephone exchange. Advanced terminal- and subscriber equipments, which nowadays are often computerized, normally get their supply of electric power straight from the electric power distribution network without battery back-up. These subscriber equipments will immediately be disabled when there is a power failure in the public electric power distribution system. GB-A-2229871 describes a simple system for power supply by means of transformers.

In certain cases a back-up power station can be connected. These back-up power stations are driven by for instance diesel engines and are fixed installed, or mobile. At longer power failures such reserve power stations can be transported to a wanted place to supply for instance an exchange with electric power. Such an effort implies that traffic chaos is not prevalent, so that the back-up power station within a reasonable period of time can be transported to the place in question. At different critical states in society this condition is not probable.

### DESCRIPTION OF THE INVENTION

### TECHNICAL PROBLEM

Battery back-ups which are arranged at exchanges and nodes are expensive at acquisition and maintenance. They require continuous attention and checking of function to continuously be in a state of alert for its task. The length of life of the batteries is further limited in time, and varying at random. The program controlled exchanges of today also must be restarted in the cases that shorter breaks in the distribution of electric power occur. Such restarts cause in present systems total standstills during at least about 20 minutes.
Terminal- and subscriber equipments located at the subscriber and which are directly dependent of the public electric distribution network will, during a power failure, be completely or partially unusable.
Consequently there is need to find solutions where the above mentioned problems can be eliminated or at least be limited. With the heavily growing number of exchanges and nodes in the telecommunication network, unaccessability and costs in connection with failures in the power distribution to the telecommunication network and its terminal- and subscriber equipments will increase and become considerable with present strategy. The present invention has the aim to find a solution to the problem.

### THE SOLUTION

The present invention relates to a device at telecommmunication network equipped with electronic storage devices. The telecommmunication network is further equipped with a distribution of electric power which has been transformed from a public electric power distribution system. In the distribution of electric power, shorter breaks can occur. The breaks in the power distribution can cause breaks in the present communication. In the telecommmunication network such units as exchanges, nodes, terminal equipments etc are included.
The information which controls the telecommunication traffic in the network is stored in at least one unit in addition to the utilized unit. The at least two units obtain distribution of electric power for their respective functions via of each other independent distribution routes. Traffic information over/via a a first unit is also stored in at least one second unit. Traffic information which has been lost in the first unit, at for instance power failure, can be transferred to the first unit, which at that is updated, and continued communication is allowed after the cease of the power failure. The traffic information which is stored, respective transferred between the units in the telecommunication network, consists of for the network necessary information for maintaining and establishing communication.
In the telecommunication network there further is arranged a distribution of electric power which supplies electric power to a number of geographically separate units. From the public electric power distribution network is at that a voltage transformed which is distributed to the geographically separate units. At the geographically separate units the distributed voltage is after that transformed to for the local need adapted voltages. The distributed voltage is distributed via one with the telecommunication network preferably parallelly arranged power distribution network. The power distribution network is preferably arranged in ring structure.

### ADVANTAGES

The suggested solution allows that the need of batteries at exchanges and nodes can be minimized. This results in a reduced cost for batteries and for maintenance. In the case that electric power distribution to certain exchanges and nodes during longer power failures is not regarded as necessary, these telecommunication networks instead can be connected locally to the public electric distribution network without battery back-up. By introducing a separate power distribution network which supplies a multiple of geographically separate units with electric power, also centrally located stand-by power stations (fixed or mobile) can supply a large number of exchanges, nodes and base stations with electric power also at very long breaks in the public distribution of electric power (weeks to months). The accessibility and the operating stability is increased independent of the public distribution of electric power, and the back up times can be extended considerably in relation to the situation of today.
At the customer located and computerized subscriber and terminal equipments also can be offered a supply of electric power independent of the public power distribution network. The customers of the telecommunication network in this way are given a limited distribution of electric power to the telecommunication equipments at power failure and can continue to communicate. The utilization of the telecommunication network during a limited period of time is today given during power failure for ordinary telephony where the equipments do not require supply of power from the public power distribution network. Data traffic and multimedia services which require electric power supplied terminals are however broken at power failure. The suggested solution allows that all types of telecommunication equipments can be offered to continue to work at power failure in the public electric power distribution.
Loss of traffic and information at power failure is limited or is eliminated completely. Any losses in message information is kept at an acceptable level. At the take over of the distribution of electric power in a second electric power source, short breaks in the communications can occur. The information which is required for keeping up the traffic is however rapidly recoverable after the power failure. The recovery of lost information is transferred from the exchange/unit which is arranged to parallelly store the traffic information. The transferred message information which may be lost is hardly perceptible.
The invention consequently gives a telecommunication system which is tolerant towards errors and independent of the public electric power distribution. Today's high demands for accessibility is fulfilled with lower operative expenses for the power distribution in the telecommunication network.

### DESCRIPTION OF FIGURES

Fig. 1 shows the distribution of electric power to included units of a telecommunication system of today.

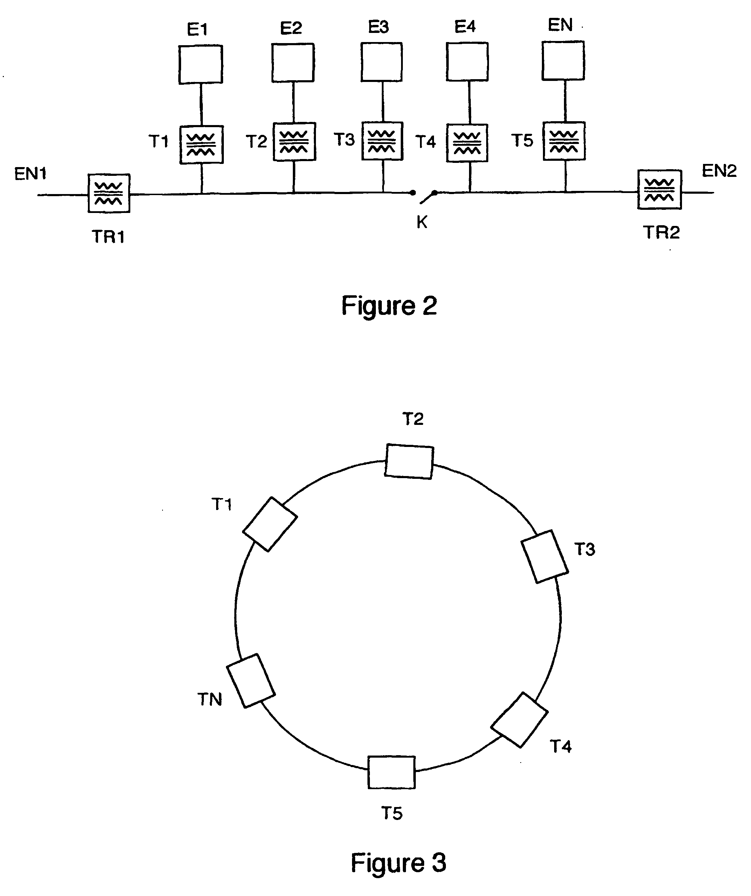

Fig. 2 shows the ring network structure for distribution of electric power to units in the telecommunication network.
Fig.3 shows a schematical picture of the distribution of electric power in a telecommunication system according to the invention.

### DETAILED EMBODIMENT

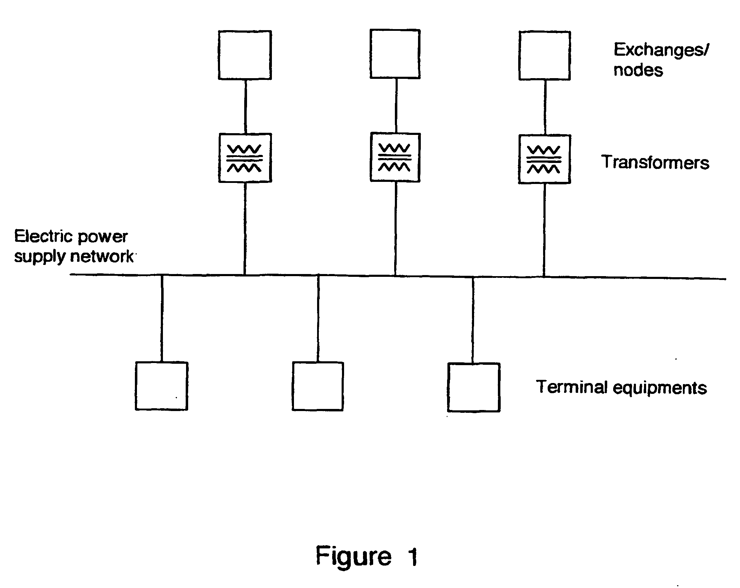

In the following the invention is described on the basis of the figures and the designations in them.
A telecommunication network includes a number of units E1, E2, E3,....EM which are voltage fed via transformer devices T1, T2, T3... TN. The transformer devices are voltage fed via a number of transformers TR1, TR2 etc. The transformers TR1, TR2 etc in their turn are voltage fed from the electric power distribution networks EN1, EN2 etc. The electric power distribution network consists of parts EN1, EN2 etc which are independent of each other. If, for instance, the electric power distribution network EN1 is disabled, the electric power distribution network EN2 will probably function. In ordinary telecommunication systems all units EN1, EN2 will be disabled at power failure, whereas the units which are voltage fed via the electric power distribution network EN2 are still functioning. In ordinary telecommunication systems according to Fig.1, electric power supply is obtained from one or more suppliers of electric power. The distribution of electric power to the units T1, T2 and T3 is obtained via the supplier of electric power EN1. The distribution of electric power to the units E4, ..,EN is obtained from the supplier of electric power EN2. Breaks in the distribution of electric power cause breaks in the functionality of the units E1, E2, E3 etc. In the ordinary construction of telecommunication networks important units are equipped with battery back-ups which take over the distribution of electric power during a limited period of time. If this time is exceeded, the unit will stop functioning. In such cases, or if shorter breaks in the distribution of electric power occur at the establishing of connection between the electric power distribution systems, programmed data can be partly or completely lost. To get the unit back in usable condition after that, requires updating of lost data. Affected communications must after that be re-established by respective communicator. A number of supplies of electric power EN1, EN2 etc are arranged where the delivered voltage is transformed to a suitable voltage in the transformers TR1, TR2, etc. The transformed voltage is adapted to a voltage which can be transported in the electric power distribution network, LE, over a wanted distance. The power which can be taken out from the electric distribution network in question, LE, is further adapted to the power consumption which can arise in the current case. The distribution of electric power over the electric power distribution network LE consequently is made via a number of independent electric power distribution routes EN1, EN2 etc, and to make it possible for the electric power distribution to function acceptably, voltages, frequencies, phases etc are adapted to each other. The construction in this respect is in accordance with the construction of ordinary public electric power distribution networks. In other variants the electric power distribution can be managed by for instance electric power distribution route EN1 via transformer EN1. At break in electric power distribution via EN1, this is sensed at the connection point for, for instance, EN2. When a break in the electric power distribution has been observed, a switching in the electric distribution network LE is made over the switch K, at which the distribution of electric power is made via transformer TR2. A distribution of electric power with principally no break is at that achieved, but at the switching, break can occur which destroys the memory content in one or more of the units E1,...E3. To bridge this difficulty, for instance unit EN1 continuously exchanges information with unit EN2. All information regarding current communication and subscriber data etc is consequently stored on at least two of each other independent places in the telecommunication network. Transfer of data is made either over the ordinary transport routes of the telecommunication network, or over dedicated lines only intended for information interchange between the units.
At a break in the distribution of electric power from EN1, the distribution of electric power is taken over by EN2. At the connection of EN2 a shorter break in the distribution of electric power to the units E1, E2 and E3 can occur. These units at that can lose information which is of importance for the communication. If this occurs, the units EM1...EM however has stored information regarding data and traffic in the units E1, E2 and E3. In the case that only a smaller part of the traffic information has been lost, the lost information is transferred beween for instance E1 and EM1. After the updating E1 re-establishes the communications which have previously been established. This is made within a space of time which by the communicators are experienced as if no break has occurred; however a disturbance in the communication can possibly be perceived.

## Claims

1. Device for restoring telecommunication traffic in a telecommunication network during power disrupts, the telecommunication network comprising a number of units (E1, E2, E3,...) arranged to be powered by a number of transformer devices (T1, T2, T3,...), that are powered by a number of power transformers (TR1, TR2,...), which are adapted for power supply from a power distribution network,
**characterised in that**;
- the power distribution network includes two independent portions (EN1, EN2),
- a switch (K) is arranged to reconnect the power distribution from one of the portions (EN1) to the other portion (EN2) if a power disrupt is discovered in one of the portions,
- a first unit (E1, E2, E3), arranged at the power distribution network on one side of the switch (K), is arranged to continuously exchange information regarding data and communication with a second unit (E4,..., EN) arranged on the other side of the switch (K), wherein information regarding communication and data is continuously stored in at least two units (E1,..., EN) in the telecommunication network, the two units (E1,..., EN) being arranged to get power from two independent portions (EN1, EN2),
- information lost in the first unit (E1, E2, E3) during power disrupt is arranged to be transferred from the second unit (E4,....,EN) to the first unit (E1, E2, E3), and -the first unit (E1, E2, E3) is arranged to re-establish a disrupted communication.

2. The device according to claim 1, wherein the power transformers (TR1, TR2) are arranged to transform the voltage from the portions (EN1, EN2) to a first voltage, and wherein the transformer devices (T1,..., TN) are arranged to transform the first voltage to a second voltage suitable for the power need of the units (E1,...EN).

3. The device according to claim 2, wherein the first voltage is high and the second voltage is adapted to a local need where the power supply of the units (E1,..., EN) is run without a battery and wherein the power supply is taken directly from the public power grid.

4. The device according to any of the preceding claims, wherein a ring-shaped grid is arranged parallel to the telecommunication network for distributing the first voltage.

5. The device according to any of the preceding claims, wherein the units (E1,..., EN) are for example stations, nodes, or customer accessories connected to the telecommunication network, arranged for mutual communication.

6. The device according to any of the preceding claims, wherein several of the geographically distanced units (E1,..., EN) are arranged to get a power supply from one or more common power supply points, in which reserve power plants can be arranged.

## Patentansprüche

1. Vorrichtung zum Zurückspeichern von Telekommunikationsverkehr in einem Telekommunikationsnetzwerk während Versorgungsunterbrechungen, wobei das Telekommunikationsnetzwerk eine Anzahl von Einheiten (E1, E2, E3, ...) aufweist, die ausgebildet sind, um durch eine Anzahl von Transformatorvorrichtungen (T1, T2, T3, ...) gespeist zu werden, die durch eine Anzahl von Leistungstransformatoren (TR1, TR2, ...) gespeist werden, die für die Leistungsversorgung von einem Leistungsverteilungsnetzwerk ausgebildet sind, **dadurch gekennzeichnet, dass**
das Leistungsverteilungsnetzwerk zwei unabhängige Teile (EN1, EN2) aufweist,
ein Schalter (K) ausgebildet ist, um die Leistungsverteilung von einem der Teile (EN1) zu dem anderen Teil (EN2) rück zu verbinden, falls eine Leistungsunterbrechung in einem der Teile entdeckt wird,
eine erste Einheit (E1, E2, E3), die an dem Leistungsverteilungsnetzwerk auf einer Seite des Schalters (K) angeordnet ist, ausgebildet ist, um kontinuierlich Information bezüglich Daten und Kommunikation mit einer zweiten Einheit (E4, ..., EN) auszutauschen, die auf der anderen Seite des Schalters (K) angeordnet ist, wobei Information bezüglich Kommunikation und Daten kontinuierlich in zumindest zwei Einheiten (E1, ..., EN) in dem Telekommunikationsnetzwerk gespeichert werden, wobei die zwei Einheiten (E1, ..., EN) ausgebildet sind, um die Leistung von den zwei unabhängigen Teilen (EN1, EN2) zu erhalten,
Information, die in der ersten Einheit (E1, E2, E3) während eine Leistungsunterbrechung verloren geht, ausgebildet ist, um von der zweiten Einheit (E4, ..., EN) zu der ersten Einheit (E1, E2, E3) übertragen zu werden, und
die erste Einheit (E1, E2, E3) ausgebildet ist, um eine unterbrochene Kommunikation wiederherzustellen.

2. Vorrichtung nach Anspruch 1, wobei die Leistungstransformatoren (TR1, TR2) ausgebildet sind, die Spannung von den Teilen (EN1, EN2) zu einer ersten Spannung zu wandeln, und wobei die Transformatorvorrichtungen (T1, ..., TN) ausgebildet sind, die erste Spannung in eine zweite Spannung zu wandeln, die für den Leistungsbedarf der Einheiten (E1, ..., EN) geeignet ist.

3. Vorrichtung nach Anspruch 2, wobei die erste Spannung hoch ist und die zweite Spannung an einen lokalen Bedarf angepasst ist, wobei die Leistungsversorgung der Einheiten (E1, ..., EN) ohne eine Batterie betrieben wird und wobei die Versorgungsleistung direkt von einem öffentlichen Versorgungsnetz genommen wird.

4. Vorrichtung nach einem der vorstehenden Ansprüche, wobei ein ringförmiges Gitter parallel zu dem Telekommunikationsnetzwerk zum Verteilen der ersten Spannung angeordnet ist.

5. Vorrichtung nach einem der vorstehenden Ansprüche, wobei die Einheiten (E1, ..., EN) beispielsweise Stationen, Knoten oder Benutzerzusatzgeräte sind, die mit dem Telekommunikationsnetzwerk für gegenseitige Kommunikation verbunden sind.

6. Vorrichtung nach einem der vorstehenden Ansprüche, wobei einige der geographisch beabstandeten Einheiten (E1, ..., EN) ausgebildet sind, um eine Leistungsversorgung von einem oder mehreren der gemeinsamen Versorgungszufuhrpunkte zu erhalten, in denen Reserveversorgungsanlagen angeordnet werden können.

## Revendications

1. Dispositif de restauration du trafic de télécommunication dans un réseau de télécommunication pendant des coupures d'alimentation en énergie, le réseau de télécommunication comprenant une pluralité d'unités (E1, E2, E3, ...) agencées pour être alimentées par une pluralité de dispositifs de transformation (T1, T2, T3, ...), qui sont alimentés par une pluralité de transformateurs d'alimentation (TR1, TR2, ...) qui sont prévus pour la fourniture d'énergie à partir d'un réseau de distribution d'énergie,
**caractérisé en ce que** :
le réseau de distribution d'énergie comprend deux parties indépendantes (EN1, EN2),
un commutateur (K) est agencé pour reconnecter la distribution d'énergie d'une des parties (EN1) à l'autre partie (EN2) si une coupure d'énergie est découverte dans une des parties,
une première unité (E1, E2, E3), agencée dans le réseau de distribution d'énergie sur un côté du commutateur (K), est prévue pour échanger continuellement des informations concernant les données et la communication avec une deuxième unité (E4, ..., EN) agencée sur l'autre côté du commutateur (K), de sorte que les informations concernant la communication et les données sont continuellement stockées dans au moins deux unités (E1,..., EN) dans le réseau de télécommunication, les deux unités (E1, ..., EN) étant agencées pour recevoir une alimentation en provenance des deux parties indépendantes (EN1, EN2),
les informations perdues dans la première unité (E1, E2, E3) pendant la coupure d'alimentation sont prévues pour être transférées de la deuxième unité (E4, ..., EN) à la première unité (E1, E2, E3), et
la première unité (E1, E2, E3) est agencée pour rétablir une communication interrompue.

2. Dispositif selon la revendication 1, dans lequel les transformateurs d'alimentation (TR1, TR2) sont agencés pour transformer la tension des parties de réseau (EN1, EN2) à une première tension, et dans lequel les dispositifs de transformation (T1,...,TN) sont agencés pour transformer la première tension en une deuxième tension convenant pour le besoins d'alimentation des unités (E1,..., EN).

3. Dispositif selon la revendication 2, dans lequel la première tension est haute et la deuxième tension est adaptée à un besoin local lorsque la fourniture d'énergie aux unités (E1,..., EN) est effectuée sans batterie, et dans lequel la fourniture d'énergie est prise directement sur le réseau public de distribution d'énergie.

4. Dispositif selon une quelconque des revendications précédentes, dans lequel un réseau en anneau est agencé parallèlement au réseau de télécommunication pour distribuer la première tension.

5. Dispositif selon une quelconque des revendications précédentes, dans lequel les unités (E1, ..., EN) sont par exemple des stations, des noeuds ou des accessoires de client connectés au réseau de télécommunication, agencés pour communication mutuelle.

6. Dispositif selon une quelconque des revendications précédentes, dans lequel plusieurs des unités géographiquement éloignées (E1, ..., EN) sont agencées pour recevoir une fourniture d'énergie à partir d'un ou plusieurs points de fourniture d'énergie communs, dans lequel des installations de production d'énergie en réserve peuvent être prévues.
